# EUROPEAN PATENT SPECIFICATION

(11) **EP 1 493 625 B1**
(45) Date of publication and mention of the grant of the patent: **09.01.2008**
(21) Application number: 03101988.8
(22) Date of filing: 03.07.2003
(51) Int. Cl.: B60R 9/04, B60J 7/00, B60J 7/04

(54) **Roof construction for a vehicle and roof rail for such a roof construction**
Fahrzeugdachkonstruktion und Dachreling für solch eine Dachkonstruktion
Construction de toit pour véhicule et galerie pour une telle construction de toit

(43) Date of publication of application: 05.01.2005
(73) Proprietor: Inalfa Roof Systems Group B.V., 5804 AH Venray (NL)
(72) Inventor: Manders, Peter, Christiaan, Leonardus, Johannes, 5961 SM Horst (NL)
(74) Representative: Voncken, Bartholomeus Maria Ch.

(56) References cited:
- US-B1- 6 345 859
- US-B1- 6 454 346
- PATENT ABSTRACTS OF JAPAN vol. 2002, no. 03, 3 April 2002 (2002-04-03) -& JP 2001 328489 A (MAZDA MOTOR CORP), 27 November 2001 (2001-11-27)
- PATENT ABSTRACTS OF JAPAN vol. 1998, no. 09, 31 July 1998 (1998-07-31) & JP 10 086673 A (TOYOTA AUTO BODY CO LTD), 7 April 1998 (1998-04-07)

## Description

The invention firstly relates to a roof construction for a vehicle, with a stationary roof section, a roof opening provided in said stationary roof section, an open roof construction at least comprising a movable closure panel and having mounting means for connecting said open roof construction to the edges of the roof opening, and with two roof rails for the connection of roof carriers to the stationary roof section, which roof rails extend in the longitudinal direction of the vehicle, and wherein cover members are provided covering the gap between the roof rails and the open roof construction.

Such a roof construction has been disclosed in US 6,345 859 B1.

Generally, the roof rails substantially follow the curved outer contour of the stationary roof section and thus are curved. The open roof construction comprises guides for the movable closure panel, which guides however extend longitudinally in a straight line. As a result de distance between a roof rail and the open roof construction changes along the length of the vehicle. This means, that the cover member covering the gap between the roof rails and the open roof construction also has a changing dimension in the lengthwise direction of the vehicle.

In a known roof construction for a vehicle said cover members are positioned between the roof rails and the open roof construction, as a result of which seams are created which negatively impair the appearance of the vehicle.

Thus it is an object of the present invention to provide a roof construction for a vehicle of the type referred to above, in which said disadvantage is eliminated in a simple, yet nevertheless effective manner.

Thus, in a first aspect of the present invention, there is provided a roof construction for a vehicle, with a stationary roof section, a roof opening provided in said stationary roof section, an open roof construction at least comprising a movable closure panel and having mounting means for connecting said open roof construction to the edges of the roof opening, and with two roof rails for the connection of roof carriers to the stationary roof section, which roof rails extend in the longitudinal direction of the vehicle, and wherein cover members are provided covering the gap between the roof rails and the open roof construction, characterized in that the cover members are integral parts of the respective roof rails.

Because now the cover members are integral parts of the respective roof rails, a seam between the cover members and respective roof rails is eliminated. The cover members are shaped such that, at each longitudinal position along the vehicle, they fully span the gap between the roof rail and the open roof construction.

In a preferred embodiment of the roof construction according to the present invention the roof rails with integrated cover members are extruded parts. When the extrusion process has been completed, the cover members can be machined to obtain the desired dimensions. Further, the roof rail with integrated cover member then can be bend into the desired shape to follow precisely the contour of the stationary roof section it has to be attached to.

In yet another aspect of the present invention there is provided a roof construction, wherein the edges of the roof opening are provided with substantially horizontally and inwardly of the roof opening protruding first members and the mounting means of the open roof construction are provided with substantially horizontally and outwardly of the roof opening protruding second members positioned above and in parallel to the first members, and wherein the cover members engage the second members.

Such an embodiment is very helpful when connecting the open roof construction to the edges of the roof opening. Most times, an adhesive is applied between the mounting means of the open roof construction and the edges of the roof opening. After positioning the roof construction into the roof opening the cover members will engage the second members of the open roof construction and will maintain the open roof construction in a correct position while the adhesive is cured.

Preferably, the cover members are provided with downwardly extending engagement means for engaging the upper face of the second members.

Further it is possible, that the first members are staggered downwardly relative to the top of the stationary roof section wherein the roof rails are attached on top of the outermost parts of said first members.

As a result the roof rails as well as the open roof construction are recessed relative to the stationary roof section, such that a smooth outer contour of the roof construction is obtained.

When, in accordance with yet another aspect of the present invention, the cover members are attached to the second members, the open roof construction together with the roof rails can be mounted to the stationary roof section as a single unit.

The invention further relates to a roof rail for a roof construction according to the present invention. Such a roof rail comprises a main section for housing an end of a roof carrier and further comprises a cover member integrally connected with said main section and extending along substantially the entire length of the roof rail.

Such a roof rail in accordance with the present invention may be an extruded part (which, after extrusion, may be machined to obtain the desired dimensions and shape).

The invention will now be elucidated referring to the drawing, in which embodiments of the roof construction according to the present invention are illustrated.
Figure 1 shows a partial cross section of a first embodiment of an open roof open roof construction in accordance with the present invention, and
figure 2 shows in a corresponding manner a second embodiment thereof.

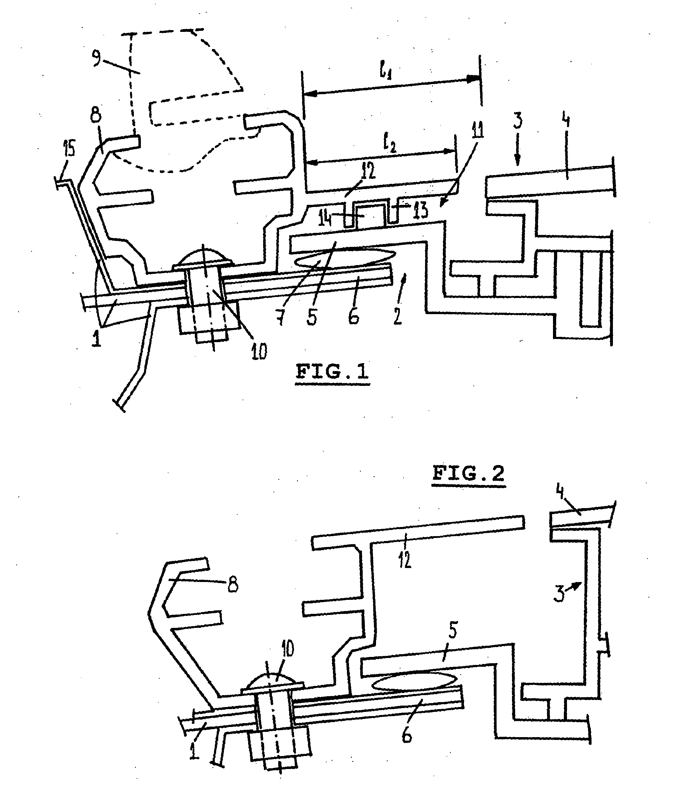

Firstly referring to figure 1, there is shown part of a stationary roof section 1 of a vehicle. In said stationary roof section 1 a roof opening 2 is provided. In said roof opening 2 an open roof construction 3 is mounted, of which the specific construction is not important for understanding the present invention, but which at least comprises a movable closure panel 4 (which can be moved in a longitudinal direction of the vehicle, perpendicularly to the drawing, for opening and closing the roof opening in a manner known per se), and mounting means 5 for connecting said open roof construction 3 to the edges of the roof opening 2, especially substantially horizontally and inwardly of the roof opening 2 protruding first members 6 of the stationary roof section 1.

In the shown embodiment an adhesive 7 is used to create a connection between the mounting means 5 of the open roof construction 3 and the protruding member 6 of the stationary roof section 1.

The roof construction further comprises two roof rails 8 (only one of which is shown, the other being positioned at an opposite side of the roof opening 2) extending in the longitudinal direction of the vehicle and meant for the connection of roof carriers 9. In the shown embodiment bolts 10 are used to connect the roof rails 8 to the stationary roof section 1.

The roof rails 8 generally follow the curved outer contour of the stationary roof section and thus are curved themselves too. The open roof construction however generally extends in a straight line. As a result, a gap 11 is created between the roof rail 8 and the open roof construction 3 having, for example, a variable width l₁ along the lengthwise direction of the vehicle. This gap 11 has to be covered, and thus the roof rail 8 is provided with an integral cover member 12 substantially spanning the gap 11. Because the gap 11 has a varying width the cover member 12 also will have a varying length l₂.

The roof rail 8 with integrated cover member 12 preferably is an extruded part which, after extrusion, is machined to obtain the desired shape and dimensions. Especially, the roof rail 8 and cover member 12 are bend in such a way to follow the contour of the stationary roof section, whereas the cover member 12 is cut to the desired shape such that its local length l₂ substantially corresponds with the local width l₁ of the gap 11.

In the embodiment shown in figure 1 the cover member 12 comprises downwardly protruding engagement means 13 for engaging the mounting means 5 of the open roof construction 3 (or, in this specific case, a protrusion 14 thereof).

When tightening the bolts 10 for attaching the roof rails 8 to the stationary roof section 1, the mounting means 5 (which are shaped as substantially horizontally and outwardly of the roof opening 2 protruding members) will be sandwiched between the protruding members 6 of the stationary roof section 1 and the cover members 12 (or engagement means 13 thereof) of the roof rails 8. As a result, the open roof construction 3 is maintained securely in its position, also when the adhesive 7 has not yet cured fully.

From figure 1 it follows, that the protruding members 6 of the stationary roof section 1 are staggered downwardly relative to the top 15 of the stationary roof section. The roof rails 8 are attached on top of the outermost part of said members 6. As a result, the roof rails 8 and open roof construction 3 are recessed in the stationary roof section 1 of the vehicle.

Referring to figure 2, there is shown an alternative embodiment of the roof construction in accordance with the present invention, which substantially corresponds with the embodiment illustrated in figure 1, but in which the cover member 12 does not engage the mounting means 5 of the open roof construction 3.

The invention is not limited to the embodiments described before, which may be varied widely within the scope of the invention as defined by the appending claims. The manner in which the open roof construction is shaped and the manner in which it is attached to the stationary roof section, may differ from what has been shown. Further, the roof rails 8 may have many different shapes, as may have the cover member 12. The interaction between the cover member 12 and open roof construction 3 (in figure 1 the mounting means thereof) may also differ from what has been shown.

## Claims

1. Roof construction for a vehicle, with a stationary roof section (1), a roof opening (2) provided in said stationary roof section, an open roof construction (3) at least comprising a movable closure panel (4) and having mounting means (5) for connecting said open roof construction to the edges of the roof opening, and with two roof rails (8) for the connection of roof carriers (9) to the stationary roof section, which roof rails extend in the longitudinal direction of the vehicle, and wherein cover members (12) are provided covering the gap (11) between the roof rails and the open roof construction, **characterized in that** the cover members (12) are integral parts of the respective roof rails (8).

2. Roof construction according to claim 1, wherein the roof rails (8) with integrated cover members (12) are extruded parts.

3. Roof construction according to claim 1 or 2, wherein the edges of the roof opening (2) are provided with substantially horizontally and inwardly of the roof opening protruding first members (6) and the mounting means (5) of the open roof construction are provided with substantially horizontally and outwardly of the roof opening protruding second members positioned above and in parallel to the first members, and wherein the cover members (12) engage the second members.

4. Roof construction according to claim 3, wherein the cover members (12) are provided with downwardly extending engagement means (13) for engaging the upper face of the second members.

5. Roof construction according to claim 3 or 4, wherein the first members (6) are staggered downwardly relative to the top (15) of the stationary roof section (1) and wherein the roof rails (8) are attached on top of the outermost parts of said first members (6).

6. Roof construction according to claim 3,4 or 5, wherein the cover members (12) are attached to the second members.

7. Roof rail for a roof (8) construction according to any of the preceding claims, comprising a main section for housing an end of a roof carrier (9) and further comprising a cover member (12) integrally connected with said main section and extending along substantially the entire length of the roof rail.

8. Roof rail (8) according to claim 5, being an extruded part.

## Patentansprüche

1. Dachkonstruktion für ein Fahrzeug, mit einem stationären Dachabschnitt (1), einer Dachöffnung (2), die in dem stationären Dachabschnitt vorgesehen ist, eine Offendach-Konstruktion (3), die mindestens ein bewegbares Schließpaneel (4) und Montagemittel (5) zum Anschließen der Offendach-Konstruktion an den Rändern der Dachöffnung aufweist, und mit zwei Dachschienen (8) zum Anschließen von Dachträgern (9) am stationären Dachabschnitt, welche Dachschienen sich in Längsrichtung des Fahrzeugs erstrecken, und wobei Abdeckelemente (12) vorgesehen sind, die die Lücke (11) zwischen den Dachschienen und der Offendach-Konstruktion abdecken, **dadurch gekennzeichnet, dass** die Abdeckelemente (12) einstückige Teile der jeweiligen Dachschienen (8) sind.

2. Dachkonstruktion gemäß Anspruch 1, wobei die Dachschienen (8) mit den einstückig ausgebildeten Abdeckelementen (12) extrudierte Teile sind.

3. Dachkonstruktion gemäß Anspruch 1 oder 2, wobei die Ränder der Dachöffnung (2) mit im wesentlichen horizontal und einwärts in die Dachöffnung vorstehenden ersten Elementen (6) versehen sind und die Montagemittel (5) der Offendach-Konstruktion mit im wesentlichen horizontal und auswärts aus der Dachöffnung vorstehenden zweiten Elementen versehen sind, die über und parallel zu den ersten Elementen positioniert sind, und wobei die Abdeckelemente (12) im Eingriff mit den zweiten Elementen stehen.

4. Dachkonstruktion gemäß Anspruch 3, wobei die Abdeckelemente (12) mit sich abwärts erstreckenden Eingriffmitteln (13) zum Im-Eingriff-Stehen mit der oberen Fläche der zweiten Elemente versehen sind.

5. Dachkonstruktion gemäß Anspruch 3 oder 4, wobei die ersten Elemente (6) bezüglich des Oberteils (15) des stationären Dachabschnittes (1) abwärts versetzt angeordnet sind und wobei die Dachschienen (8) oberhalb der äußersten Teile der ersten Elemente (6) angebracht sind.

6. Dachkonstruktion gemäß Anspruch 3, 4, oder 5, wobei die Abdeckelemente (12) an den zweiten Elementen angebracht sind.

7. Dachschiene (8) für eine Dachkonstruktion gemäß einem der vorhergehenden Ansprüche, die einen Hauptabschnitt zum Unterbringen eines Endes eines Dachträgers (9) aufweist und ferner ein Abdeckelement (12) aufweist, das mit dem Hauptabschnitt einstückig verbunden ist und sich entlang im wesentlichen der gesamten Länge der Dachschiene erstreckt.

8. Dachschiene (8) gemäß Anspruch 5, die ein extrudiertes Teil ist.

## Revendications

1. Structure de toit pour un véhicule, avec une section de toit stationnaire (1), une ouverture de toit (2) disposée dans ladite section de toit stationnaire, une construction de toit ouvrant (3) comprenant au moins un panneau de fermeture mobile (4) et présentant des moyens de montage (5) pour raccorder ladite construction de toit ouvrant aux bords de l'ouverture de toit, et avec deux rails de toit (8) pour la liaison de supports de toit (9) à la section de toit stationnaire, lesquels rails de toit s'étendent dans la direction longitudinale du véhicule, et dans laquelle des éléments de revêtement (12) sont disposés pour recouvrir l'espace (11) entre les rails de toit et la construction de toit ouvrant, **caractérisée en ce que** les éléments de revêtement (12) sont des parties intégrantes des rails de toit respectifs (8).

2. Structure de toit selon la revendication 1, dans laquelle les rails de toit (8) avec les éléments de couverture intégrés (12) sont des pièces extrudées.

3. Structure de toit selon la revendication 1 ou 2, dans laquelle les bords de l'ouverture de toit (2) sont munis de premiers éléments (6) en saillie sensiblement horizontalement et à l'intérieur de l'ouverture de toit, et les moyens de montage (5) de la construction de toit ouvrant sont munis de seconds éléments faisant saillie sensiblement horizontalement et à l'extérieur de l'ouverture du toit et sont positionnés au-dessus et parallèlement aux premiers éléments, et dans laquelle les éléments de revêtement (12) coopèrent avec les seconds éléments.

4. Structure de toit selon la revendication 3, dans laquelle les éléments de revêtement (12) sont munis de moyens d'engagement s'étendant vers le bas (13) pour s'engager avec la face supérieure des seconds éléments.

5. Structure de toit selon la revendication 3 ou 4, dans laquelle les premiers éléments (6) sont décalés vers le bas par rapport au sommet (15) de la section de toit stationnaire (1), et dans laquelle les rails de toit (8) sont fixés sur le dessus des parties extérieures extrêmes des premiers éléments (6).

6. Structure de toit selon la revendication 3, 4 ou 5, dans laquelle les éléments de revêtement (12) sont fixés sur les seconds éléments.

7. Rail de toit (8) pour une structure de toit selon l'une quelconque des revendications précédentes, comprenant une section principale pour le logement d'une extrémité du support de toit (9) et comprenant de plus un élément de revêtement (12) raccordé solidairement à ladite section principale et s'étendant sensiblement le long de toute la longueur du rail de toit.

8. Rail de toit (8) selon la revendication 5, constitué par une pièce extrudée.
